# EUROPÄISCHE PATENTSCHRIFT

(11) **EP 2 017 516 B1**
(45) Veröffentlichungstag und Bekanntmachung des Hinweises auf die Patenterteilung: **09.12.2009**
(21) Anmeldenummer: 08159509.2
(22) Anmeldetag: 02.07.2008
(51) Int. Cl.: F16L 23/00

(54) **Rohrverbindung und Bauteilanordnung mit Rohrverbindung**
Tube connection and component assembly with tube connection
Raccord de tuyauterie et agencement de composant doté d'un raccord de tuyauterie

(30) Priorität: 17.07.2007 DE 102007033658
(43) Veröffentlichungstag der Anmeldung: 21.01.2009
(73) Patentinhaber: J. Eberspächer GmbH & Co. KG, 73730 Esslingen (DE)
(72) Erfinder: Krause, Michael, 55257, Budenheim (DE); Wieland, Arthur, 72631, Aichtal (DE)
(74) Vertreter: Bongen, Renaud & Partner

(56) Entgegenhaltungen:
- WO-A-98/29679
- WO-A-2006/114780

## Beschreibung

Die vorliegende Erfindung betrifft eine Verbindung für zwei axial benachbarte Enden eines rohrförmigen Körpers, insbesondere einer Abgasanlage. Die Erfindung betrifft außerdem eine Bauteilanordnung, insbesondere eine Abgasanlage, bei der ein Bauteil, das rohrförmige Endabschnitte aufweist, an diesen Endabschnitten mit jeweils einer derartigen Rohrverbindung an Rohrenden befestigt ist.

WO 2006/114780-A-offenbart eine Verbindung zweier Rohrenden, wobei jedes Rohrende einer radial nach außer abstehenden Ringflansch aufweist.

Bei bestimmten Bauteilanordnung, wie z.B. bei einer Abgasanlage, insbesondere einer Brennkraftmaschine, kann es erforderlich sein, ein durchströmbares Bauteil lösbar mit einem zuführenden und mit einem abführenden Rohr zu verbinden. Beispielsweise ist es bei Abgasanlagen erwünscht, ein Partikelfilter aus dem Abgasstrang ausbauen zu können, beispielsweise um das jeweilige Partikelfilterelement austauschen bzw. reinigen zu können. Erwünscht ist dabei eine einfache Handhabbarkeit bei hinreichender Betriebssicherheit hinsichtlich Dichtigkeit und Temperaturbeständigkeit.

Die vorliegende Erfindung beschäftigt sich mit dem Problem, für eine Verbindung bzw. für eine Bauteilanordnung der eingangs genannten Art eine verbesserte Ausführungsform anzugeben, die sich insbesondere durch eine vereinfachte Montage und Demontage auszeichnet.

Erfindungsgemäß wird dieses Problem durch den Gegenstand des unabhängigen Anspruchs gelöst. Vorteilhafte Ausführungsform sind Gegenstand der abhängigen Ansprüche.

Die Erfindung beruht auf dem allgemeinen Gedanken, die jeweilige Rohrverbindung mit einem Zentrierring auszustatten, der axial zwischen den miteinander zu verbindenden Rohrenden angeordnet ist und der radial außen mehrere Kragensegmente aufweist, von denen die einen an der einen Seite des Zentrierrings axial abstehen und von denen die anderen an der andere Seite des Zentrierrings axial abstehen. Außerdem wird eine Schelle vorgesehen, die radial außen die Ringkragen der Rohrenden und den Zentrierring axial und radial übergreift. Die Kragensegmente übergreifen dabei die miteinander zu verbindenden Rohrenden radial außen in axialer Richtung. Hierdurch kann eine außenliegende Zentrierung der beiden miteinander zu verbindenden Rohrenden erzielt werden. Dies kann - je nach Ausgestaltung - die Herstellung bzw. das Lösen der jeweiligen Rohrverbindung vereinfachen. Da die Kragensegmente, welche die Zentrierung der beiden Rohrenden bewirken, außerhalb des gasführenden Bereichs der Rohre angeordnet sind, ergibt sich eine reduzierte thermische Belastung der Kragensegmente, wodurch die Verbindung eine erhöhte Zuverlässigkeit besitzt. Desweiteren ist der bezüglich der Rohrenden ein separates Bauteil bildende Zentrierring insbesondere als Ersatzteil konzipiert, und kann somit beim Lösen der Rohrverbindung und beim erneuten Herstellen der Rohrverbindung ersetzt werden. Auch diese Maßnahme erhöht die Zuverlässigkeit der Rohrverbindung.

Entsprechend einer vorteilhaften Ausführungsform weist der Zentrierring in einem Kreisbogen von 180° entweder nur ein einziges Kragensegment oder mehrere, jeweils an der gleichen Seite abstehende Kragensegmente auf. Diese besondere Bauweise ermöglicht es bei fehlender Schelle die beiden axial benachbarten Rohrenden relativ zueinander radial zu verstellen. Hierdurch ergibt sich die Möglichkeit, bei einem Bauteil, das an seinen axialen Enden jeweils mit einer derartigen Rohrverbindung in eine Rohrleitung eingebunden ist, bei geöffneten Schellen radial aus dieser Rohrleitung herauszunehmen, ohne dass es erforderlich ist, die Rohrenden, zwischen denen das jeweilige Bauteil in die Rohrleitung eingebunden ist, relativ zueinander axial zu verschieben. Hierdurch wird der Einbau und der Ausbau des jeweiligen Bauteils erheblich vereinfacht. Beispielsweise kann somit ein Partikelfilter aus der zugehörigen Abgasleitung radial ausgebaut werden, ohne dass die Abgasleitung hierzu in axialer Richtung bewegt werden muss.

Gemäß einer anderen vorteilhaften Ausführungsform können zwei ringförmige Dichtkörper vorgesehen sein, von denen der eine einerseits an dem einen Ringkragen und andererseits an der einen Seite des Zentrierrings axial abgestützt ist und von denen der andere einerseits an dem anderen Ringkragen und andererseits an der anderen Seite des Zentrierrings axial abgestützt ist. Mit Hilfe der Dichtkörper kann eine effektive Gasdichtigkeit der Rohrverbindung realisiert werden. Besonders vorteilhaft ist dabei eine Ausführungsform, bei welcher die Dichtkörper am Zentrierring befestigt sind. Einerseits wird dadurch die Montage der Rohrverbindung erheblich vereinfacht. Anderseits ergibt sich bei der Konzipierung des Zentrierrings als Ersatzteil die Möglichkeit, auf einfache Weise die Dichtungen der Rohrverbindung beim Demontieren und erneuten Montieren zusammen mit dem Zentrierring einfach auszutauschen. Auch diese Maßnahme erhöht die Zuverlässigkeit der jeweiligen Rohrverbindung.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Bauteile beziehen.

Es zeigen, jeweils schematisch,
- Fig. 1: eine perspektivische Ansicht einer Verbindung,
- Fig. 2: einen zentralen Querschnitt durch die Verbindung,
- Fig. 3: einen Längsschnitt entsprechend Schnittlinien III in Fig. 2 durch einen Randbereich der Verbindung,
- Fig. 4: einen Längsschnitt entsprechend Schnittlinien IV in Fig. 2 durch einen Randbereich der Verbindung,
- Fig. 5: eine stark vereinfachte, prinzipielle Seitenan- sicht einer Bauteilanordnung.

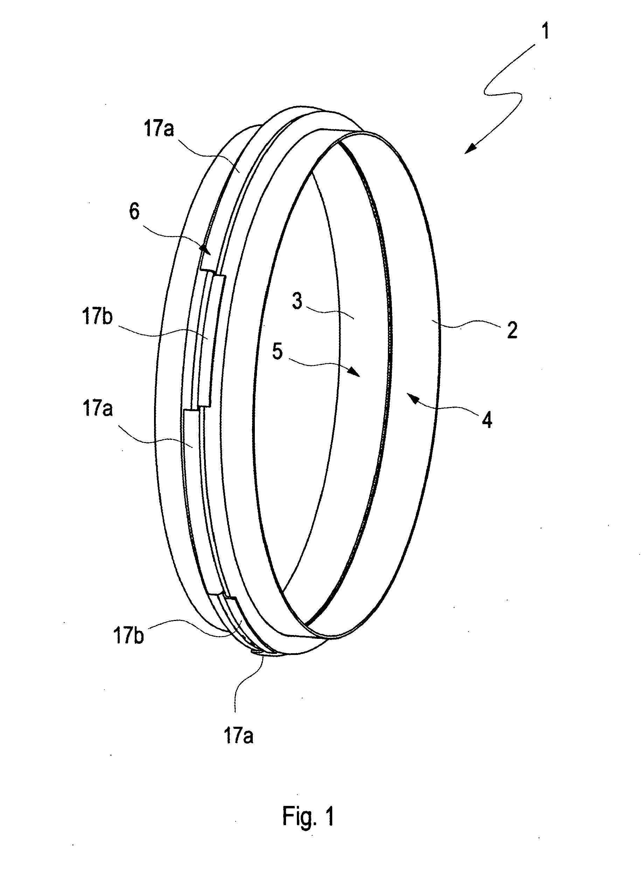

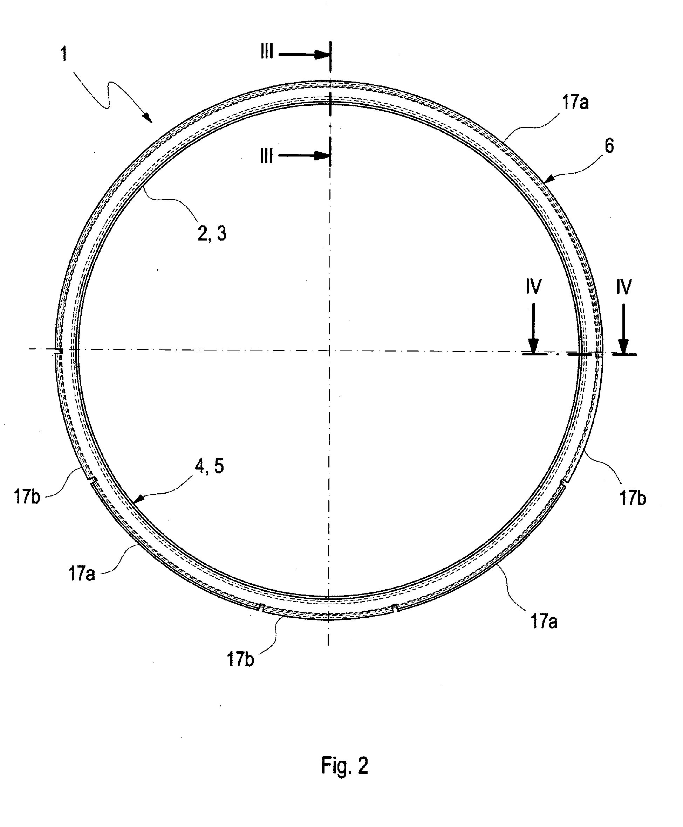

Entsprechend den Fig. 1 bis 4 weist eine Verbindung 1, die dazu dient, zwei axial benachbarte Enden 2, 3 rohrförmiger, hier nur teilweise dargestellter Körper 4, 5 miteinander zu verbinden, einen Zentrierring 6 sowie eine Schelle 7 auf. In den Fig. 1 und 2 ist die Schelle 7 nicht dargestellt. Eine hier nicht dargestellte Trennebene, in welcher die beiden Rohrenden 2, 3 aneinander stoßen, erstreckt sich dabei senkrecht zur Längsachse des jeweiligen Rohrkörpers 4, 5.

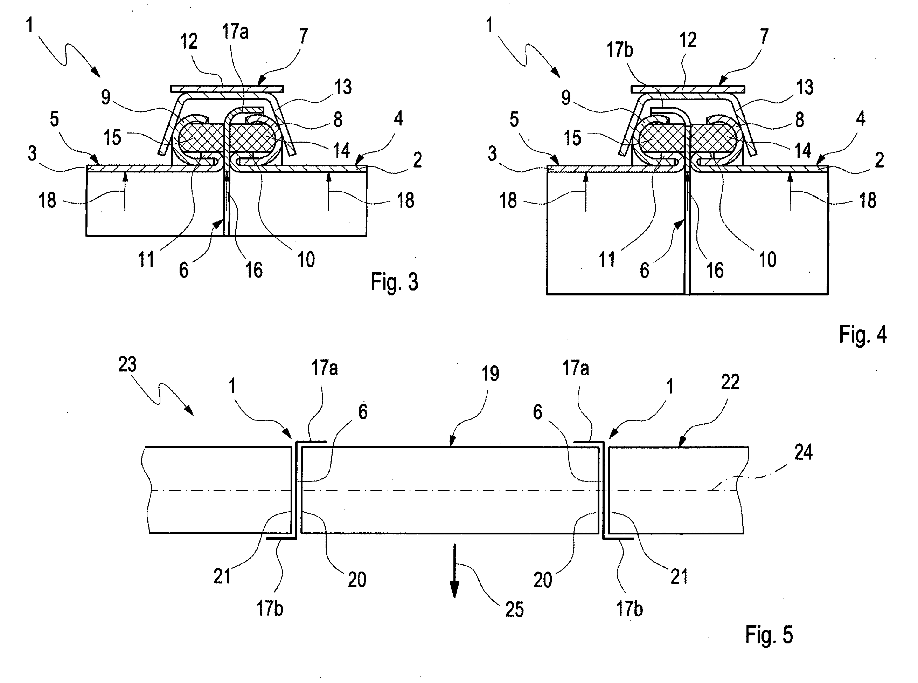

Entsprechend den Fig. 3 und 4 weist jedes Rohrende 2, 3 einen radial nach außen abstehenden Ringkragen 8 bzw. 9 auf. Der jeweilige Ringkragen 8, 9 steht dabei radial nach außen vom jeweiligen Rohrende 2, 3 ab. Bei der hier gezeigten, bevorzugten Ausführungsform handelt es sich beim jeweiligen Ringkragen 8, 9 bezüglich des jeweiligen Rohrendes 2, 3 jeweils um ein separates Bauteil, das an das jeweilige Rohrende 2, 3 angebaut ist. Der jeweilige Ringkragen 8, 9 ist hierbei C-förmig gestaltet und so angeordnet, dass er zum jeweils anderen Rohrende 2, 3 hin axial offen ist. Zur Verbindung der Ringkragen 8, 9 mit den Rohrenden 2, 3 ist am jeweiligen Rohrende 2, 3 ein Endabschnitt 10 bzw. 11 um 180° radial außen zurückgebogen, derart, dass dadurch ein Schenkel des C-Profils des jeweiligen Ringkragens 8, 9 am Rohrende 2, 3 eingeklemmt wird. Beispielsweise lassen sich die Ringkragen 8, 9 durch Rollieren an den Rohrenden 2, 3 befestigen. Zusätzlich können die Ringkragen 8, 9 mit den Rohrenden 2, 3 verlötet sein. Ebenso sind andere Befestigungsmethoden durchführbar. Alternativ ist es ebenso möglich, den jeweiligen Ringkragen 8, 9 integral am zugehörigen Rohrende 2, 3 auszubilden.

Der Zentrierring 6 ist axial zwischen den Rohrenden 2, 3 angeordnet. Ferner weist der Zentrierring 6 radial außen mehrere Kragensegmente 17 auf. In jedem Fall sind zumindest zwei Kragensegmente 17 vorhanden. Im dargestellten Beispiel sind ohne Beschränkung der Allgemeinheit sechs Kragensegmente 17 vorgesehen. Dabei weist der Zentrierring 6 verschiedene Kragensegmente 17 auf. Die einen, mit 17a bezeichneten Kragensegmente stehen an der einen Seite des Zentrierrings 6 axial ab, während die anderen, mit 17b bezeichneten Kragensegmente an der andere Seite des Zentrierrings 6 abstehen. Die verschiedenen Kragensegmente 17a und 17b stehen somit in entgegengesetzten Richtungen axial vom Zentrierring 6 ab.

Wie insbesondere den Fig. 1 und 2 entnehmbar ist, sind die unterschiedlichen Kragensegmente 17a, 17b am Zentrierring 6 so ausgebildet, dass sie einander abwechselnd an der einen bzw. an der andere Seite vom Zentrierring 6 axial abstehen.

Die einen Kragensegmente 17a übergreifen gemäß Fig. 3 den Ringkragen 8 des einen Rohrendes 2 radial außen in axialer Richtung. Im Unterschied dazu übergreifen die anderen Kragensegmente 17b den Ringkragen 9 des anderen Rohrendes 3 radial außen und in axialer Richtung. Hierdurch ergibt sich eine radiale Zentrierung bzw. eine axial fluchtende Ausrichtung der beiden Rohrenden 2, 3 relativ zueinander, wobei die Zentrierung an den Ringkragen 8, 9 radial außen erfolgt.

Die Schelle 7 ist entsprechend den Fig. 3 und 4 so ausgestaltet, dass sie die Ringkragen 8, 9 und den Zentrierring 6 radial außen in axialer Richtung und in radialer Richtung übergreift. Hierzu weist die Schelle 7 beispielsweise ein Spannband 12, das mit Hilfe einer entsprechenden, hier nicht gezeigten Spanneinrichtung in Umfangsrichtung unter Zugspannung gesetzt werden kann, sowie wenigstens ein im Profil U-förmiges oder wannenförmiges Halteelement 13 auf, welches die Ringkragen 8, 9 übergreift und an diesen zur Anlage kommt. Vorzugsweise ist die Schelle 7 dabei so ausgestaltet, dass die in das Spannband 12 eingeleitete Zugspannung über das wenigstens eine Halteelement 13 in eine axiale Vorspannung transformiert werden kann, welche die beiden Rohrenden 2, 3 über die beiden Ringkragen 8, 9 axial aufeinander zu vorspannt.

Entsprechend Fig. 2 ist gemäß der hier gezeigten bevorzugten Ausführungsform der Zentrierring 6 so ausgestaltet, dass er in einem Kreisbogen von 180°, das entspricht in Fig. 2 der oberen Hälfte des gezeigten Querschnitts, nur ein einziges Kreissegment 17 aufweist, hier das Kreissegment 17a, das sich durchgehend über etwa 180° erstreckt. Alternativ ist es ebenso möglich, den Zentrierring 6 so auszugestalten, dass er im Kreisbogen von 180° mehrere Kragensegmente 17 aufweist, die jedoch alle an der gleichen Seite vom Zentrierring 6 abstehen. Bei dieser Variante enthält der 180°-Kreisbogen dann entweder nur Kragensegmente 17a oder nur Kragensegmente 17b. Diese Ausgestaltung ermöglicht es, die beiden Rohrenden 2, 3 bei fehlender Schelle 7 relativ zueinander in radialer Richtung zu verstellen. Dies vereinfacht die Montage und Demontage bzw. das Herstellen und Lösen der Rohrverbindung 1.

Entsprechend den Fig. 3 und 4 kann die Rohrverbindung 1 vorzugsweise zwei ringförmige Dichtkörper 14, 15 aufweisen. Der eine Dichtkörper 14 ist dabei einerseits an dem einen Ringkragen 8 und andererseits an der einen Seite des Zentrierrings 6 axial abgestützt. Zusätzlich kann dieser Dichtkörper 14 auch radial am Rohrende 2, hier am zurückgebogenen Endabschnitt 10 abgestützt sein. Der andere Dichtkörper 15 ist einerseits am anderen Ringkragen 9 und andererseits an der anderen Seite des Zentrierrings 6 axial abgestützt. Zusätzlich kann auch dieser Dichtkörper 15 radial am jeweiligen Rohrende 3, hier am zurückgebogenen Endabschnitt 11 abgestützt sein. Vorzugsweise ist dabei der jeweilige Dichtkörper 14, 15 an den Zentrierring 6 befestigt. Beispielsweise sind die Dichtkörper 14, 15 an den Zentrierring 6 angeklebt oder daran anvulkanisiert oder im Rahmen ihrer Herstellung daran angespritzt. Die Ringkragen 8, 9 besitzen hier vorzugsweise jeweils ein zum Zentrierring 6 hin offenes Profil, z.B. ein C-Profil oder ein U-Profil. Der jeweilige Dichtkörper 14 greift dabei durch die offene Seite des Profils in den jeweilige Ringkragen 8, 9 ein. Hierdurch ergibt sich eine besonders stabile Abstützung für den jeweiligen Dichtkörper 14, 15 innerhalb des jeweiligen Ringkragens 8, 9.

Bei der hier gezeigten Ausführungsform weist der Zentrierring 6 gemäß den Fig. 3 und 4 einen Innenquerschnitt 16 auf, der so dimensioniert ist, dass sich die Rohrenden 2, 3 nicht aneinander, sondern am Zentrierring 6 abstützen. Vorzugsweise ist der Innenquerschnitt 16 des Zentrierrings 6 dabei etwa gleich groß dimensioniert wie ein Innenquerschnitt 18 des jeweiligen Rohrendes 2, 3. Hierdurch wird die Gasströmung im jeweiligen Rohrsystem nicht oder nur unwesentlich beeinflusst.

Entsprechend Fig. 5 kann die zuvor beschriebene Rohrverbindung 1, die in Fig. 5 im wesentlichen jeweils durch den stark vereinfacht dargestellten Zentrierring 6 angedeutet ist, dazu verwendet werden, ein Bauteil 19 an rohrförmigen Endabschnitten 20 jeweils an einem Rohrende 21 einer Rohrleitung 22 lösbar anzubringen. Das Bauteil 19 ist dadurch in die Rohrleitung 22 eingebunden und bildet zusammen mit dieser eine Bauteilanordnung 23. Beispielsweise handelt es sich bei der Bauteilanordnung 23 um eine Abgasanlage einer Brennkraftmaschine. Beispielsweise handelt es sich beim Bauteil 19 um ein Partikelfilter oder um ein beliebiges anderes austauschbar einzubindendes Bauteil, das in eine Abgasleitung, hier in die Rohrleitung 22 eingebaut ist. Erfindungsgemäß sind die beiden Verbindungen 1, mit denen das Bauteil 19 in einem axialen Abschnitt der Bauteilanordnung 23 in die Rohrleitung 22 eingebaut ist, so realisiert, dass die beiden Zentrierringe 6 bezüglich einer senkrecht zur Achsrichtung 24 verlaufenden Symmetrieebene spiegelsymmetrisch angeordnet sind. Die Zentrierringe 6 sind dabei so orientiert, dass die jeweiligen 180°-Kreisbogen hinsichtlich ihrer Drehlage etwa gleich ausgerichtet sind und dass die Kragensegmente 17a dieser 180°-Kreisbogen aufeinander zu vom jeweiligen Zentrierring 6 abstehen. Alternativ können die Zentrierringe 6 auch so angeordnet sein, dass die Kragensegmente 17a dieser 180°-Kreisbogen voneinander weg vom jeweiligen Zentrierring 6 abstehen. Diese Bauweise ermöglicht es, das Bauteil 19 bei gelösten Schellen 7, in radialer Richtung, also entsprechend einem Pfeil 25 aus der Rohrleitung 22 herauszunehmen, mit oder ohne den Zentrierringen 6. Hierbei ist insbesondere keine Axialverstellung der beiden Rohrenden 21 der Rohrleitung 22 erforderlich, was den Ausbau und den Einbau des Bauteils 19 erheblich vereinfacht. Analog dazu kann das Bauteil 19 für seinen Einbau entgegen dem Pfeil 25 radial in die Lücke zwischen den Rohrenden 21 hinein bewegt werden.

## Patentansprüche

1. Verbindung für zwei axial benachbarte Enden (2, 3) jeweils eines rohrförmiges Körpers (4, 5), insbesondere einer Abgasanlage,
- wobei jedes Rohrende (2, 3) einen radial nach außen abstehenden Ringkragen (8, 9) aufweist,
**dadurch gekennzeichnet, dass** ein Zentrierring (6) vorgesehen ist, der axial zwischen den Rohrenden (2, 3) angeordnet ist und der radial außen mehrere Kragensegmente (17) aufweist,
- wobei die einen Kragensegmente (17a) an der einen Seite des Zentrierrings (6) axial abstehen und den Ringkragen (8) des einen Rohrendes (2) radial außen axial übergreifen,
- wobei die anderen Kragensegmente (17b) an der anderen Seite des Zentrierrings (6) axial abstehen und den Ringkragen (9) des anderen Rohrendes (3) radial außen axial übergreifen,
- wobei eine Schelle (7) vorgesehen ist, die radial außen die Ringkragen (8, 9) und den Zentrierring (6) axial und radial übergreift.

2. Verbindung nach Anspruch 1,
**dadurch gekennzeichnet,**
**dass** der Zentrierring (6) in einem Kreisbogen von 180° ein einziges Kragensegment (17a) oder mehrere, jeweils an der gleichen Seite abstehende Kragensegmente (17a; 17b) aufweist.

3. Verbindung nach Anspruch 1 oder 2,
**dadurch gekennzeichnet,**
**dass** zwei ringförmige Dichtkörper (14, 15) vorgesehen sind, von denen der eine einerseits an dem einen Ringkragen (8) und andererseits an der einen Seiten des Zentrierrings (6) axial abgestützt ist und von denen der andere einerseits an dem anderen Ringkragen (9) und andererseits an der anderen Seite des Zentrierrings (6) axial abgestützt ist.

4. Verbindung nach Anspruch 3,
**dadurch gekennzeichnet,**
**dass** die Dichtkörper (14, 15) am Zentrierring (6) befestigt sind.

5. Verbindung nach einem der Ansprüche 1 bis 4,
**dadurch gekennzeichnet,**
**dass** zumindest einer der Ringkragen (8, 9) ein zum Zentrierring (6) hin offenes Profil aufweist, in das insbesondere der jeweilige Dichtkörper (14, 15) eingreifen kann.

6. Verbindung nach einem der Ansprüche 1 bis 5,
**dadurch gekennzeichnet,**
- **dass** zumindest einer der Ringkragen (8, 9) integral am jeweiligen Rohrende (2, 3) ausgebildet ist, und/oder
- **dass** zumindest einer der Ringkragen (8, 9) bezüglich des jeweiligen Rohrendes (2, 3) als separates Bauteil ausgestaltet ist, das an das jeweilige Rohrende (2, 3) angebaut ist, insbesondere durch Rollieren.

7. Verbindung nach einem der Ansprüche 1 bis 6,
**dadurch gekennzeichnet,**
- **dass** ein Innenquerschnitt (16) des Zentrierrings (6) so dimensioniert ist, dass sich die Rohrenden (2, 3) axial am Zentrierring (6) abstützen, und/oder
- **dass** ein Innenquerschnitt (16) des Zentrierrings (6) etwa gleich groß dimensioniert ist wie die Innenquerschnitte (18) der Rohrenden (2, 3).

8. Verbindung nach einem der Ansprüche 1 bis 7,
**dadurch gekennzeichnet,**
**dass** die Kragensegmente (17a, 17b) einander abwechselnd an der einen Seite und an der anderen Seite vom Zentrierring (6) axial abstehen.

9. Bauteilanordnung, insbesondere Abgasanlage, mit einem Bauteil (19), das rohrförmige Endabschnitte (20) aufweist und das an seinen Endabschnitten (20) mit jeweils einer Verbindung (1) nach Anspruch 2 an jeweils einem Rohrende (21) befestigt ist, wobei die Zentrierringe (6) der beiden Verbindungen (1) so orientiert sind, dass die jeweiligen 180°-Kreisbogen hinsichtlich ihrer Drehlage etwa gleich ausgerichtet sind und dass die Kragensegmente (17a) dieser 180°-Kreisbogen aufeinander zu oder voneinander weg vom jeweiligen Zentrierring (6) abstehen.

10. Bauteilanordnung nach Anspruch 9, **gekennzeichnet durch** die kennzeichnenden Merkmale wenigstens eines der Ansprüche 3 bis 8.

## Claims

1. A connection for two axially adjacent ends (2, 3) each of a tubular body (4, 5), more preferably of an exhaust system,
- wherein each pipe end (2, 3) comprises a ring collar (8, 9) standing away to the outside, **characterized in that** a centring ring (6) is provided which is arranged axially between the pipe ends (2, 3) and which radially on the outside comprises a plurality of collar segments (17),
- wherein the one collar segments (17a) stand away axially on the one side of the centring ring (6) and axially engage over the ring collar (8) of the one pipe end (2) radially on the outside,
- wherein the other collar segments (17b) axially stand away on the other side of the centring ring (6) and axially engage over the ring collar (9) of the other pipe end (3) radially on the outside,
- wherein a clamp (7) is provided which engages over the ring collars (8, 9) radially on the outside and the centring ring (6) axially and radially.

2. The connection according to Claim 1, **characterized in that** the centring ring (6) in an arc of a circle of 180° comprises a single collar segment (17a) or a plurality of collar segments (17a; 17b) each standing away on the same side.

3. The connection according to Claim 1 or 2, **characterized in that** two ring-shaped sealing bodies (14, 15) are provided of which the one on the one hand is axially supported on the one ring collar (8) and on the other hand on the one side of the centring ring (6) and of which the other one on the one hand is axially supported on the other ring collar (9) and on the other hand on the other side of the centring ring (6).

4. The connection according to Claim 3, **characterized in that** the sealing body (14, 15) is fastened to the centring ring (6).

5. The connection according to any one of the Claims 1 to 4, **characterized in that** at least one of the ring collars (8, 9) has a profile which is open towards the centring ring (6) in which the respective sealing body (14, 15) can engage.

6. The connection according to any one of the Claims 1 to 5, **characterized in that** at least one of the ring collars (8,9) is embodied integrally on the respective pipe end (2, 3), and/or
- **in that** at least one of the ring collars (8, 9) with respect to the respective pipe end (2, 3) is embodied as separate component which is attached to the respective pipe end (2, 3) more preferably through rolling.

7. The connection according to any one of the Claims 1 to 6, **characterized**
- **in that** an inner cross section (16) of the centring ring (6) is so dimensioned that the pipe ends (2, 3) axially support themselves on the centring ring (6) and/or
- **in that** an inner cross section (16) of the centring ring (6) is dimensioned approximately in the same size as the internal cross sections (18) of the pipe ends (2, 3).

8. The connection according to any one of the Claims 1 to 7, **characterized in that** the collar segments (17a, 17b) alternating with one another axially stand away from the centring ring on the one side and on the other side (6).

9. A component arrangement, more preferably exhaust system, with a component (19), having tubular end sections (20) and at which at its end sections (20) is fastened to a pipe end (21) with a connection (1) according to Claim 2 each, wherein the centring rings (6) of the two connections (1) are so orientated that the respective 180° arcs of a circle are orientated approximately identically with respect to their position of rotation and that the collar segments (17a) of these 180° arcs of a circle stand away from the respective centring ring (6) facing each other or facing away from each other.

10. The component arrangement according to Claim 9, **characterized by** the characterizing features of at least one of the Claims 3 to 8.

## Revendications

1. Liaison pour deux extrémités (2, 3) voisines axialement de respectivement un corps (4, 5) tubulaire, en particulier d'une installation d'échappement,
- chaque extrémité de tube (2, 3) présentant une collerette annulaire (8, 9) dépassant radialement à l'extérieur,
**caractérisée en ce qu'**une bague de centrage (6) est prévue, laquelle est disposée axialement entre les extrémités de tube (2, 3) et qui présente radialement à l'extérieur plusieurs segments de collerette (17),
- les segments de collerette (17a) dépassant axialement sur un côté de la bague de centrage (6) et recouvrant axialement la collerette annulaire (8) de l'une des extrémités de tube (2) radialement à l'extérieur,
- les autres segments de collerette (17b) dépassant axialement sur l'autre côté de la bague de centrage (6) et recouvrant axialement la collerette annulaire (9) de l'autre extrémité de tube (3) radialement à l'extérieur,
- une bride (7) étant prévue, laquelle recouvre radialement à l'extérieur les collerettes annulaires (8, 9) et la bague de centrage (6) axialement et radialement.

2. Liaison selon la revendication 1,
**caractérisée en ce que**
la bague de centrage (6) présente dans un arc de cercle de 180° un unique segment de collerette (17a) ou plusieurs segments de collerette (17a, 17b) dépassant respectivement sur le même côté.

3. Liaison selon la revendication 1 ou 2,
**caractérisée en ce que**
deux corps d'étanchéité (14, 15) de forme annulaire sont prévus, dont l'un est soutenu axialement d'une part sur l'une des collerettes annulaires (8) et d'autre part sur l'un des côtés de la bague de centrage (6) et dont l'autre est soutenu d'une part sur l'autre collerette annulaire (9) et d'autre part sur l'autre côté de la bague de centrage (6).

4. Liaison selon la revendication 3,
**caractérisée en ce que**
les corps d'étanchéité (14, 15) sont fixés sur la bague de centrage (6).

5. Liaison selon l'une quelconque des revendications 1 à 4,
**caractérisée en ce que**
au moins l'une des collerettes annulaires (8, 9) présente un profilé ouvert en direction de la bague de centrage (6), dans laquelle en particulier le corps d'étanchéité (14, 15) respectif peut s'engager.

6. Liaison selon l'une quelconque des revendications 1 à 5,
**caractérisée en ce que**
- au moins l'une des collerettes annulaires (8, 9) est conçue intégralement sur l'extrémité de tube (2, 3) respective, et/ou
- **en ce qu'**au moins l'une des collerettes annulaires (8, 9) est conçue par rapport à l'extrémité de tube (2, 3) respective sous forme de composant séparé, lequel est rapporté à l'extrémité de tube (2, 3) respective, en particulier par roulement.

7. Liaison selon l'une quelconque des revendications 1 à 6,
**caractérisée en ce que**
- une section intérieure (16) de la bague de centrage (6) est dimensionnée de telle sorte que les extrémités de tube (2, 3) s'appuient axialement sur la bague de centrage (6), et/ou
- **en ce qu'**une section intérieure (16) de la bague de centrage (6) est dimensionnée à peu près aussi grande que les sections intérieures (18) des extrémités de tube (2, 3).

8. Liaison selon l'une quelconque des revendications 1 à 7,
**caractérisée en ce que**
les segments de collerette (17a, 17b) débordent l'une de l'autre axialement de la bague de centrage (6) alternativement sur un côté et sur l'autre côté.

9. Agencement de composant, en particulier installation de gaz d'échappement, comprenant un composant (19) qui présente des parties d'extrémité (20) de forme tubulaire et qui est fixé sur ses parties d'extrémité (20) avec respectivement une liaison (1) selon la revendication 2 sur respectivement une extrémité de tube (21), les bagues de centrage (6) des deux liaisons (1) étant orientées de telle sorte que les arcs de cercle de 180° respectifs sont orientés à peu près de façon identique en ce qui concerne leur position d'orientation et en ce que les segments de collerette (17a) de ces arcs de cercle de 180° débordent de la bague de centrage (6) respective les uns vers les autres ou à partir les uns des autres.

10. Agencement de composant selon la revendication 9, **caractérisé par** les caractéristiques de nouveauté d'au moins l'une des revendications 3 à 8.
